(19) Europäisches Patentamt / European Patent Office / Office européen des brevets

(11) **EP 2 369 433 A1**

(12) **EUROPEAN PATENT APPLICATION**

(43) Date of publication:
**28.09.2011 Bulletin 2011/39**

(51) Int Cl.:
*G05B 17/02* (2006.01)   *G05B 13/04* (2006.01)

(21) Application number: **10157555.3**

(22) Date of filing: **24.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **ABB Research Ltd.**
**8050 Zürich (CH)**

(72) Inventors:
• **Mercangoez, Mehmet**
  **5405, Baden-Dättwil (CH)**

• **Mathur, Tarun**
  **560037, Bangalore (IN)**
• **Von Hoff, Thomas**
  **5443, Niederrohrdorf (CH)**

(74) Representative: **ABB Patent Attorneys**
**C/o ABB Schweiz AG**
**Intellectual Property (CH-LC/IP)**
**Brown Boveri Strasse 6**
**5400 Baden (CH)**

(54) **Computer-based method and device for automatically providing control parameters for a plurality of coal mills supplying coal powder to a plant**

(57) A computer-based method and a computing device (3) for automatically providing control parameters for a plurality of coal mills (5a, 5b, 5c) supplying coal powder for example to a furnace (7) of a power plant is proposed. The method comprises (a) acquiring a multiplicity of operation variables indicative of a load of an individual coal mill for each of the coal mills by measuring actual parameters indicative of a coal mill operation; (b) acquiring a demand variable indicative of a coal demand from the plant; (c) supplying the acquired multiplicity of operation variables and the demand variable to a computing system; (d) calculating the control parameters based on the multiplicity of operation variables and the demand variable using a multivariable calculation algorithm, in particular a model predictive algorithm; (e) providing the calculated control parameters for controlling an operation of each coal mill individually; and (f) repeating steps (a)-(e). Due to using a multivariable calculation algorithm for calculating the control parameters taking into account a multiplicity of actual operation variables and demand variables from components of the power plant, the coal grinding load may be optimally allocated to each individual coal mill thereby enabling high efficiency and high velocity ramp up or ramp down of the plant operation.

Fig. 1

Printed by Jouve, 75001 PARIS (FR)

## Description

Field of the invention

The present invention relates to a computer-based method for automatically providing control parameters for a plurality of coal mills supplying coal powder to a plant such as a power plant or a cement production plant. Furthermore, the present invention relates to a method of controlling such plant, to a computing device being adapted for performing the inventive method, to a plant comprising such computing device, to a computer program product adapted for performing the inventive method and to a computer-readable medium having stored thereon a respective computer program product.

Technical background

Modem coal fired power plants or cement plants generally bum coal in a pulverized form. The coal is ground to a fine powder in coal mills. Then, the powder is carried to a furnace in fluidized form by transport or primary air. In the furnace, the coal powder is burnt and the generated thermal energy may be used for example in steam production for producing electricity or in cement production.

Typically, an air pressure drop across a coal grinding mill may be indicative of an amount of powder being fluidized within the mill. The amount of fluidized powder in the mill and the pressure drop tends to increase with increasing coal grinding load. When the pressure drop across a coal grinding mill exceeds a certain threshold, the pulverized coal may not be efficiently transported out of the coal mill by primary airflow anymore. This situation can lead to accumulation of explosive coal powder inside the mill and therefore may pose a significant operational risk.

A conventional practice in coal-fired power stations is to monitor the pressure drop readings in all of a plurality of coal mills supplying pulverized coal to the power station but to take no control action throughout normal operation. Once the pressure drop reading of a particular coal mill exceeds a predefined threshold value, a coal feed to that particular mill is run back to its minimum allowed limit either manually or automatically via an override scheme. In such case, it may be necessary to reallocate the reduced coal load of this particular mill to all other mills in order to maintain a total pulverized fuel flow to the combustion process within the furnace. This is, however, based on the assumption that a capacity of the remaining coal mills can take on the additional coal load. This may result in a rapid ramping up of the remaining operational coal mills, which usually increases the pressure drop in all remaining mills. It is not uncommon for the pressure drop in another mill to violate its threshold value. This may then result in a large drop of power generation capacity. The described situation may be a serious limitation of conventional power plant control schemes.

In order to avoid the drop of power generation capacity, many conventional power stations are designed to have a spare coal mill to possibly close the capacity gap when a coal mill needs to be maintained. But again, most power stations keep the spare mill in operation along with all the other mills and operate the mills below their design capacity in order to have buffer capacity to quickly take on the operation load of a tripped mill.

This practice may be wasteful from an energy efficiency point of view, because coal mills grind and dry coal feed most efficiently at their full design capacity and also because there are constant mechanical and thermal losses associated with running an extra coal mill.

Furthermore, a velocity of ramping up or ramping down the plurality of coal mills may be limited in conventional coal mill control schemes. As the coal grinding capacity of the coal mills may limit the energy generation of the power plant, such limited ramping of grinding capacity of the mills may result in limited ramping velocity of the power plant.

Summary of the invention

It may be an object of the present invention to provide a method and device for providing control parameters for a plurality of coal mills supplying coal powder to a plant wherein, due to such method or device, for example the above-mentioned shortcomings of conventional control schemes may be overcome and, particularly, coal grinding loads may be optimally allocated to each individual one of the plurality of coal mills. Particularly, an efficiency as well as a ramping velocity of the coal mill arrangement should preferably be improved. Furthermore, an overall dynamic response of the power plant to load changes should be improved. Finally, quality of the pulverized coal should also be improved thereby possibly increasing the power plant efficiency.

Such objects may be solved by the subject-matter of the independent claims. Embodiments of the invention are described in dependent claims.

According to an aspect of the present invention, a computer-based method for automatically providing control parameters for a plurality of coal mills supplying coal powder to a plant is proposed. The method comprises the following steps preferably in the following order:

   a) Acquiring a multiplicity of operation variables indicative of a load of an individual coal mill for each of the coal mills by measuring actual parameters indicative of a coal mill operation;

b) Acquiring a demand variable indicative of a coal demand from the plant;

c) Supplying the acquired multiplicity of operation variables and the demand variable to a computing system;

d) Calculating the control parameters based on the multiplicity of operation variables and the demand variable using a multivariable calculation algorithm;

e) Providing the calculated control parameters for controlling an operation of each coal mill individually;

f) Repeating steps (a)-(e).

Therein, the multivariable calculation algorithm may take into account information on an operation status of each of the coal mills. Such information on an operation status may be for example a factor indicative of a wear out of the respective mill, such as for example a number of operating hours of the mill since its last maintenance or service. Alternatively, the information on the operation status may be a temporary blockage of airflow due to irregularities of coal powder distribution within a respective mill due e.g. to excessive moisture in the coal powder, fluctuations in incoming primary air pressure, fluctuations in incoming primary air temperature, and the classifier settings at individual mills. Therein, blockage of air flow is most commonly due to the coal powder sticking together to form large lumps because of high moisture content in the incoming coal feed. The classifier is a part of the mill located at the mill exit, which spins and separates the heavy particles by centrifugal action. The blades or the revolution rate of this item may have a large impact on the product particle size.

The multivariable calculation algorithm used for calculating the control parameters may be based on physical or statistical models and such technique may be used to perform calculations across multiple dimensions while taking into account the effects of all variables on the responses of interest. One type of multivariable algorithm which may be preferably used within the proposed method may be a model predictive algorithm or model predictive control (MPC), as will be described in detail further below.

The parameters indicative of a coal mill operation which are measured for acquiring the multiplicity of operation variables, as acquired and used in calculating the control parameters, may comprise: (1) a pulverizer differential pressure parameter, also referred to as primary air pressure drop parameter, which may indicate a pressure differential between an inlet and an outlet of a coal mill; (2) a pulverized fuel exit temperature parameter which may indicate a temperature of the pulverized coal at an outlet of the coal mill; (3) the pulverizer motor current parameter which may indicate an electrical current to a driving motor of the coal mill; and (4) a primary airflow rate parameter which may indicate a flow rate of primary air supplied to the coal mill.

In the proposed computer-based method, an interaction with a human operator may be envisaged. For example, in an "advisory mode" of operation the calculated control parameters may be displayed to the operator such that the operator may then manually control each of the coal mills taking into account the provided control parameters. As an alternative, completely automatic operation may be provided for example in an online or closed loop operating mode in which the calculated control parameters are directly used to automatically control each of the coal mills. A possibility to switch between the modes can be given to the operator.

Furthermore, operator interaction may be provided by enabling operator input of at least one of the multiplicity of operation variables, the demand variables and the operation status information. In other words, using an input device such as a keyboard or a touch screen for example, a human operator may input or update one, some or all of the variables or the operation status information used in calculating the control parameters. Alternatively, provisions may be made such that all at least some or all of these variables or information is acquired automatically and provided to the computing system used for calculating the control parameters. Thereby, completely automatic operation may be enabled.

The steps of acquiring the multiplicity of operation variables and the demand variable, then supplying the acquired variables to the computing system, then calculating the control parameters based thereon and finally providing the calculated control parameters may be repeated periodically and in a way to provide the control parameters in real-time. In other words, the desired variables may be continuously acquired, e.g. every 20 seconds, and the control parameters may be immediately calculated and provided to a human operator or to an automatic control system for controlling each of the coal mills individually.

According to further aspects of the present invention, a method of controlling coal powder supply to a plant, a computing device, a plant, a computer program product and a computer-readable medium are proposed, all of them using the teaching and principles according to the invention or embodiments thereof as explained above.

A basic idea underlying the present invention is to improve an overall control scheme for controlling a coal powder supply from a multiplicity of coal mills to a plant by taking into account several or all of a multiplicity of variables indicative of an actual load of each individual coal mill and indicative of a coal demand from the plant in order to calculate therefrom control parameters to be used for controlling an operation of each coal mill individually.

While in conventional coal mill control schemes, each of a multiplicity of coal mills was generally controlled to operate with the same load under normal conditions and this load was only modified in case of an emergency, i.e. when a threshold of an air pressure drop along the coal mill was exceeded indicating a possible risk of a coal mill explosion, wherein, then, the lost coal mill capacity of this specific coal mill was equally distributed to the remaining coal mills, an idea of the present invention is to control each of the multiple coal mills in a more intelligent way.

To that end, a multivariable calculation algorithm such as e.g. a model predictive algorithm uses operation variables of all the coal mills together with the demand variable of the plant in order to calculate control parameters for each of the coal mills, respectively. In such calculation, further information is preferably taken into account, this information being indicative of e.g. a possible load capacity of each individual coal mill which load capacity may depend e.g. on the working hours of this coal mill since its last maintenance.

Based on such approach, the coal grinding load may be allocated optimally to each individual coal mill thereby improving the efficiency of the control scheme and of the plant controlled therewith.

The possibility of individually controlling the coal loading to each coal mill, while maintaining the total fuel feed to the furnace of the plant, may be only one of the advantages of using the proposed method. The use of internal models to predict the behaviour of mill dynamics may bring about a major advantage during start-up, ramp-up and ramp-down of the power plant since the control system now may have the ability to anticipate a future state of mill operation. Based on this capability, the proposed method and device may allow to improve an overall dynamic response of coal fired power plants by tens of percentage points compared to conventional control systems.

Finally, the inclusion of a mathematical model for the coal grinding process in the multivariable calculation algorithm can further enable an estimation and control of the pulverized fuel fineness to a certain extent depending on the availability of a measurement for the pulverized fuel fineness. In case such a measurement does not exist, the multivariable calculation algorithm can still push actuators of the coal mills affecting the fuel fineness such as revolutions of the dynamic classifiers to their limits in order to optimize the fuel fineness while maintaining the operational objectives such as mainly the pulverized fuel flow.

It has to be noted that aspects and embodiments of the present invention are described herein with reference to different subject-matters. In particular, some embodiments are described with reference to the method type claims whereas other embodiments are described with reference to apparatus type claims. However, a person skilled in the art will gather from the above and the following description that, unless other notified, in addition to any combination of features belonging to one type of subject-matter also any combination between features relating to different subject-matters, in particular between features of the apparatus type claims and features of the method type claims, is considered to be disclosed with this application.

Brief description of the drawing

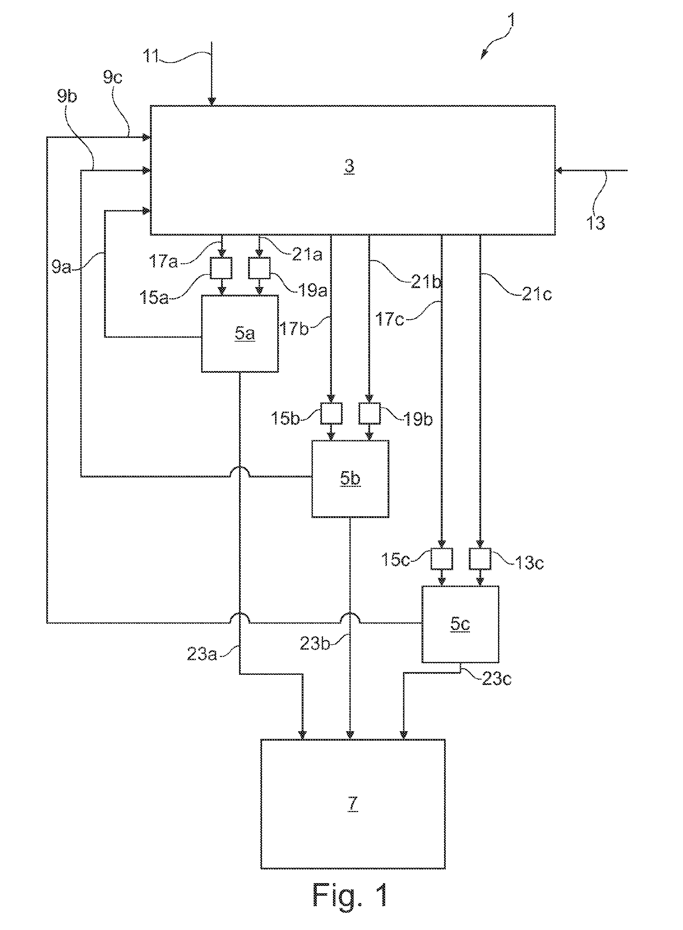

Fig. 1 schematically shows components of a power plant with a control operating in accordance with a computer-based method of an embodiment of the present invention.

Detailed description of embodiments

Embodiments of the present invention relate to the control of coal grinding mills for supplying coal powder to a plant. The coal grinding process generally involves multiple coal grinding mills to meet a pulverized fuel requirement from downstream processes and devices such as boilers in a power station or rotary kilns in a cement plant.

Fig. 1 shows components of a plant 1 comprising a computing device 3 acting as a control for controlling components of the power plant, a multiplicity of coal mills 5a, 5b, 5c for grinding coal to pulverized fuel and a furnace 7 for burning the pulverized fuel in order to generate thermal power for the plant 1. The master controller (not shown in Figure 1) may determine the amount of the pulverized fuel required by the plant 1.

The computing device 3 uses a multivariable calculation algorithm for calculating control parameters for controlling each of the coal mills 5a, 5b, 5c individually. Thereby, an allocation of the total coal demand from the master controller of plant 1 may be allocated to the individual coal mills appropriately. In order to do so, operation variables indicative of the operating state of an individual coal mill 5a, 5b, 5c are acquired for each of the coal mills by measuring actual parameters and are provided to the computing device 3 via input channels 9a, 9b, 9c. For example, the measured actual parameters may be primary air pressure drops $\Delta P1$, $\Delta P2$, $\Delta P3$ in each of the coal mills 5a, 5b, 5c. Alternatively, other parameters may be measured and provided to the computing device 3 such as a pulverizer differential pressure, a pulverized fuel exit temperature, a pulverizer motor current, and/or a primary airflow rate. Furthermore, a demand variable indicative of a coal demand from the plant or its master controller is acquired and supplied to the computing device 3 via communication channel 11.

In order to generate a suitable control model to be used in calculating the control parameters using a multivariable calculation algorithm, information on an operation status of each of the coal mills is furthermore supplied to the computing device 3 via supply channel 13. This operation status information may include for example factors indicative of a wear out of each of the mills 5a, 5b, 5c, which factors may depend on a number of operating hours of the respective mill since its last maintenance. Alternatively, the information may comprise a temporary blockage of airflow due to irregularities of coal powder distribution within a mill, fluctuations in incoming primary air pressure, fluctuations in incoming primary air temperature and/or dynamic classifier settings.

As will be described in further detail below, the computing device 3 may calculate control parameters for controlling an operation of each of the coal mills 5a, 5b, 5c individually using a multivariable calculation algorithm taking into account a multiplicity of operation variables and the demand variable as well as preferably the information on the operation status, also referred to as operational fitness, of the mills.

The calculated control parameters may comprise a mill coal feeder speed set point which may be provided to respective coal feeder speed controllers 15a,b,c via supply channels 17a,b,c which may then control a feeder speed actuator comprised in a respective coal mill 5a, 5b, 5c. Furthermore, the control parameters may comprise respective primary airflow set points to be provided to respective primary airflow controllers 19a,b,c via supply channels 21a,b,c in order to finally control respective primary airflow actuators comprised in the coal mills 5a, 5b, 5c. Both, the coal feeder speed controllers 15a,b,c as well as the primary airflow controllers 19a,b,c, may be further regulated by measuring a coal feeder speed and primary airflow, respectively, wherein the primary airflow may be additionally corrected for temperature variations. Other calculated control parameters not shown in Figure 1 may include hot and cold primary air damper positions or fan motor speeds, mill grinding table motor speed, dynamic classifier rotating speed or corresponding setpoints controlling these parameters.

As a result of such control scheme, the coal mills 5a, 5b, 5c may be individually operated at suitable load conditions. Each of the coal mills 5a, 5b, 5c grinds coal and supplies the pulverized fuel to the furnace 7 via respective supply lines 23a,b,c in order to satisfy the coal demand and to enable the boiler master to operate in accordance with the actual energy generation requirements.

One of the possible multivariable calculation algorithms which can be used in the computing device 3 for calculating the control parameters is a model predictive control (MPC). An MPC based coal mill control scheme can use operation variables, i.e. optimizing criteria, which are adapted in real-time, to determine a coal demand for each individual mill rather than just dividing the total coal demand equally over the plurality of coal mills as is done in prior control approaches. This is preferably done in automatic mode operation. A not so obvious advantage of handling the coal demand allocation with a multivariable controlling algorithm is the fact that it may create a new degree of freedom for the control of the pressure drop in the coal mills. Conventional control schemes in use today can generally not control the mill pressure drop during normal operation since they do not have an extra degree of freedom to serve as a manipulated variable. The mill pressure drop is mainly a function of the coal load to that particular coal mill, which is already in use as a manipulated variable to control the heat input to the power plant. On the other hand, an MPC based coal mill control can automatically adjust the relative loadings of all the mills individually, while maintaining a total constant coal fuel to the furnace thus creating a possibility to maintain the mill pressure drop within acceptable limits.

A main reason behind the extra degree of freedom for control is that even if the coal mills are designed identical, individual grinding and coal transport performances may be different due to various factors. One of these factors may be mills wear out due to normal operation. The number of operating hours of a mill since its last maintenance and service may be a good indication of that mills effective grinding capacity. Other factors include temporary blockage of airflow due to irregularities in coal powder distribution inside the mills, fluctuations in incoming primary air pressure and temperature, and classifier settings. In short, an MPC based control scheme may enable for automatically shifting the coal load from a mill with high pressure drop to another mill with lower pressure drop by an optimal amount, which is beyond the capabilities of conventional mill control systems.

In the following, details of an exemplary calculation scheme for calculating control parameters using a multivariable calculation algorithm, in particular a model predictive algorithm, are provided. The scheme is also referred to as model predictive coal mill controller.

According to an embodiment of the present invention, a model predictive coal mill controller consists of a collection of software routines in the computing device forming a real time computing platform chosen for the control application. A possible example for such a real time computing platform is a personal computer with network access to the power plant distributed control system. The collection of software routines include

(i) a data collection and distribution application,
(ii) a state estimator,
(iii) a coal mill model which is parameterized and duplicated for the number of coal mills in the power plant, and
(iv) an optimizer.

The software routines are executed periodically, preferably every 20 s. The sequence of execution of these software routines are carried out as follows.

Step 1. (Data collection)

The available parameter measurements and the desired operating conditions from the coal mills in the power plant are collected via the network access to the power plant distributed control system. The measurements include but are not limited to the pressure drop, the grinding table motor power consumption, the operational hours, the primary air inlet and/or exit temperatures, the primary air flowrate. The desired operating conditions in the form of setpoints include but are not limited to the total coal demand from the coal mills and the primary air exit temperatures.

Step 2. (State estimation)

The coal mill mathematical model used in the multivariable calculation algorithm is in its simplest form a group of equations relating the time dependent behavior of the coal mill outputs to the coal mill inputs or manipulated variables. E.g. how much and how fast will the pulverized coal output increase when the raw coal input is increased by a certain percentage.
The equations can have but are not limited to the following form:

$$x(k+1) = f(x(k),u(k)) \qquad\qquad Eq.1$$

$$y(k) = h(x(k)) \qquad\qquad Eq.2$$

wherein
x represents the internal states or status information of the coal mill such as the pulverized coal holdup,
u represents the inputs or the manipulated variables of the coal mill such as the primary air flowrate, and
y represents the measurable outputs from the coal mill such as the pulverized fuel temperature.
f and h are linear or nonlinear functions and
k represents a point in time.
The dependence of the future state of the coal mill at time k+1 to the current state at time k as shown in Eq.1 enables the mathematical model to make predictions about the future behavior of the coal mill or estimate the current state of the coal mill based on past measurements when k+1 represents the current time and k represents the past.
The state estimator is a software routine capable of solving an optimization problem that may add error terms to Eq.1 and Eq.2 and may fit past measurements y into these equations to find a current state x by minimizing the error terms.
In order to incorporate measurements sampled more than one time step in the past Eq.1 and Eq.2 are recursively extended into the past by replacing k by k-1, k-2,.., k-n.
It is important to note that when f and h are linear functions and the estimation is carried out by extending the equations one time step into the past the estimation will be equivalent to a Kalman filter.
The purpose of the state estimation step is to obtain information about unmeasurable properties of a coal mill such as the coal hold up by relating them through the mathematical model to measurable properties such as the pressure drop and the motor power consumption.
The state estimation step described above has to be carried out for each coal mill that is in operation individually. Therefore functions f and h described in Eq. 1 and Eq.2 are required to be available a priori for each coal mill. It is important to note that the functions f and h will be different for each mill indicating the particularities of their operation mainly the state of wear of the grinding surfaces and hence the grinding efficiency. The functions f and h for each mill can be parameterized and the parameters can be adapted in real time to track the changes in the coal mill behavior.

Step 3. (Optimization)

In the optimization step trajectories for the inputs or manipulated variables, which serve as decision variables for controlling the coal mills, are determined (e.g. a coal feeder setpoint). For this purpose an optimization objective is specified in terms of the coal mill inputs (u), coal mill outputs (y), and coal mill internal states (x).

Possible objectives can be maximizing the pulverized fuel output, maximizing the speed of response to power plant load changes, or maximizing the pulverized fuel quality or fineness. It is also possible to create an objective as a weighted combination of all these objectives.

A final component for the optimization task is to specify the constraints to be satisfied by a feasible optimal solution, which are in this case the coal mill models given in Eq.1 and Eq.2, operational constraints on the inputs or manipulated variables (u) such as minimum and maximum primary air flow, operational constraints on the outputs (y) such as minimum and maximum pulverized fuel temperature, and operational constraints on the internal states such as minimum and maximum coal hold up.

It may be pointed out that compared to the state estimation step in the optimization step Eq.1 and Eq.2 are recursively extended into the future by replacing k by k+1, k+2,.., k+p, which may allow to utilize the predictive functionality of the coal mill models.

A possible representation of the optimization problem can be given as follows:

$$\text{Max } g(u(k),u(k+1),\ldots u(k+p),\ y(k),\ y(k+1),\ldots y(k+p),\ x(k),\ x(k+1),\ldots x(k+p))$$

Subject to

$$x(k+1) = f(x(k),u(k))$$

$$y(k)=h(x(k))$$

$$u\_min(k)<u(k)<u\_max(k)$$

$$y\_min(k)<y(k)<y\_max(k)$$

$$x\_min(k)<x(k)<x\_max(k)$$

for all k

where g represents the objective function and _min and _max represent the upper or lower limits for the preceding variables. These limits may have to be explicitly provided to the optimization software either offline or during operation via the data collection and distribution application.

Step 4. (Implementation)

Once a solution to the optimization problem is determined by the optimization software the results for the current time step k for the inputs or manipulated variables are distributed via a data collection and distribution application to the power plant distributed control system to be implemented in the physical coal mill system via the actuator assemblies. After Step 4 the algorithm returns to Step 1 and continues in a recursive manner.

The MPC system described above can be realized by a real-time computing system capable of solving constraint optimization problems. Depending on a complexity of the coal mill models, a linear, quadratic or non-linear programming problem can be constructed for optimization. The equations representing the dynamics of all the individual pulverizers in the coal mills, the constraints representing the actuator limits, and finally the equations representing the optimizing objectives may need to be loaded onto a memory of the real-time computing system. The input required to solve the optimization problem, herein also referred to as operation variables and demand variables, may comprise sensor readings from the pulverizers such as a pulverizer differential pressure, a pulverized fuel exit temperature, a pulverizer motor current, a primary airflow rate, a primary air pressure drop, etc., and the master controller coal demand. These inputs may need to be provided periodically with a suitable sampling rate in real-time to the computing device. The solution of the optimization problem may reveal the actuator settings and the set points for relevant existing PI or PID controllers which may be connected to the computing device with a communication channel.

The real-time computing device may be a server computer. The multivariable calculation algorithm such as the MPC algorithm may be available as a software on the server computer. The connectivity of the server computer with the sensors and the actuators as well as the existing PI and PID controllers of the power plant distributed control system may be realized via an open process control channel or via another communication protocol.

A display system to show the plant operators the calculated control parameters, model predictions, optimization results, active constraints and sensitivities of the solution to constraints may also be provided.

Further enhancement of the proposed control is possible by including online model update and parameter estimation routines in the optimization problem formulation.

The control approach described herein is applicable to ball and bowl mills, vertical grinding mills, ball and race mills, and any other type of coal grinding mill or pulverizers. Part or all of the coal mills in a power plant can be coordinated with the same control approach. Multiple coal mills in a cement production plant can also be coordinated with this control approach.

Finally, it should be noted that the term "comprising" and similar does not exclude other elements or steps and that the indefinite article "a" does not exclude the plural. Also elements described in association with different embodiments may be combined. It should also be noted that reference signs in the claims shall not be construed as limiting the scope of the claims.

LIST OF REFERENCE SIGNS

1      Plant

3      Computing device

5      Coal mill

7      Furnace

9      Supply channel for operation variables

11      Supply channel for demand variables

13      Supply channel for operation status information

15      Coal feeder speed controller

17      Supply channel for control parameter

19      Primary airflow controller

21      Supply channel for control parameter

23      Supply line for pulverized fuel

**Claims**

1.  A computer-based method for automatically providing control parameters for a plurality of coal mills (5a, 5b, 5c) supplying coal powder in a plant (1), the method comprising:

    a) acquiring (9a, 9b, 9c) a multiplicity of operation variables indicative of a load of an individual coal mill for each of the coal mills by measuring actual parameters indicative of a coal mill operation;

b) acquiring (11) a demand variable indicative of a coal demand from the plant;

c) supplying the acquired multiplicity of operation variables and the demand variable to a computing system (3);

d) calculating the control parameters based on the multiplicity of operation variables and the demand variable using a multivariable calculation algorithm;

e) providing (17a, 17b, 17c, 21a, 21b, 21c) the calculated control parameters for controlling an operation of each coal mill individually;

f) repeating steps (a) to (e).

2. The method of claim 1, wherein the multivariable calculation algorithm takes into account information (13) on an operation status of each of the coal mills.

3. The method of claim 2, wherein the information on an operation status includes at least one of
a factor indicative of a mill's wear out,
a number of operating hours of a mill since its last maintenance,
a factor indicative of mill blockage,
fluctuations in incoming primary air pressure,
fluctuations in incoming primary air temperature, and
classifier settings.

4. The method of one of claims 1 to 3, wherein the multivariable calculation algorithm comprises a model predictive algorithm.

5. The method of one of claims 1 to 4, wherein the parameters indicative of a coal mill operation comprises at least one of
a pulverizer differential pressure,
a pulverized fuel exit temperature,
a pulverizer motor current, and
a primary air flow rate.

6. The method of one of claims 1 to 5, wherein the control parameters comprise at least one of
a mill coal feeder speed set point,
a primary airflow set point,
a hot and cold primary air damper position set point,
a fan motor speeds set point,
a mill grinding table motor speed set point, and
a dynamic classifier rotating speed set point.

7. The method of one of claims 1 to 6, wherein operator interaction is provided by at least one of
enabling operator input of at least one of the multiplicity of operation variables, the demand variable and the operation status information, and
displaying calculated control parameters to an operator.

8. The method of one of claims 1 to 7, wherein the steps (a) to (e) are periodically repeated to provide the control parameters in real time.

9. A method of controlling coal powder supply in a plant (1), comprising:

providing control parameters using the method according to one of claims 1 to 8;
automatically controlling operation of each of a plurality of coal mills based on the provided parameters.

10. A computing device being adapted for performing the method according to one of claims 1 to 9.

11. A plant comprising:

a furnace (7),
a plurality of coal mills (5a, 5b, 5c), and
a computing device (3) according to claim 10.

**12.** A computer program product enabling performing the method according to one of claims 1 to 9 when executed on a computing device.

**13.** A computer readable medium having stored thereon the computer program product of claim 12.

Fig. 1

Europäisches
Patentamt

European
Patent Office

Office européen
des brevets

# EUROPEAN SEARCH REPORT

Application Number

EP 10 15 7555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 60 259820 A (MITSUBISHI HEAVY IND LTD; DENGEN KAIHATSU KK) 21 December 1985 (1985-12-21) * the whole document * | 1-13 | INV. G05B17/02 G05B13/04 |
| Y | US 6 681 155 B1 (FUJITA KAORU [JP] ET AL) 20 January 2004 (2004-01-20) * column 1, line 6 - column 8, line 19 * * figures 1-3,9 * | 1-13 | |
| A | GB 2 440 674 A (EMERSON PROCESS MANAGEMENT [US]; KONRAD SWIRSKI [PL]; TOMASZ CHOMIAK []) 6 February 2008 (2008-02-06) * the whole document * | 1-13 | |
| A | JP 2000 171027 A (ISHIKAWAJIMA HARIMA HEAVY IND) 23 June 2000 (2000-06-23) * the whole document * | 3-6 | |
| A | JP 2000 227216 A (ISHIKAWAJIMA HARIMA HEAVY IND) 15 August 2000 (2000-08-15) * the whole document * | 5,6 | TECHNICAL FIELDS SEARCHED (IPC)<br><br>G05B |

The present search report has been drawn up for all claims

| Place of search | Date of completion of the search | Examiner |
|---|---|---|
| The Hague | 29 September 2010 | Orobitg Oriola, R |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 10 15 7555

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2010

| Patent document cited in search report | | | Publication date | Patent family member(s) | | Publication date |
|---|---|---|---|---|---|---|
| JP 60259820 | A | | 21-12-1985 | NONE | | |
| US 6681155 | B1 | | 20-01-2004 | WO | 2004084371 A1 | 30-09-2004 |
| GB 2440674 | A | | 06-02-2008 | NONE | | |
| JP 2000171027 | A | | 23-06-2000 | NONE | | |
| JP 2000227216 | A | | 15-08-2000 | NONE | | |

EPO FORM P0459

For more details about this annex : see Official Journal of the European Patent Office, No. 12/82